# EUROPEAN PATENT APPLICATION

(11) **EP 4 841 864 A1**
(43) Date of publication of application: **18.11.2026**
(21) Application number: 25774897.0
(22) Date of filing: 10.03.2025
(51) Int. Cl.: H02K 1/02, H02K 1/12, H02K 15/02, H01F 1/147, H01F 1/22, B22F 3/16, B22F 1/16, C22C 38/06, C22C 38/02, C22C 38/04

(54) **SHAPED PART MANUFACTURED FROM SOFT MAGNETIC IRON-BASED POWDER AND MANUFACTURING METHOD THEREOF**

(30) Priority: 19.03.2024 KR 20240038135
(71) Applicant: Poscore Co., Ltd, Pohang-si, Gyeongsangbuk-do 37673 (KR)
(72) Inventor: KIM, Hyungjin, Seoul 05649 (KR); OH, Jintaek, Pohang-si, Gyeongsangbuk-do 37779 (KR)
(74) Representative: Gille Hrabal Partnerschaftsgesellschaft mbB Patentanwälte
(86) International application number: PCT/KR2025/003089
(87) International publication number: WO 2025/198235

(57) **Abstract**

According to the present disclosure, a formed part manufactured by compacting and heat-treating an iron-based soft magnetic powder and a method of manufacturing the same are provided. According to an embodiment of the present disclosure, a formed part is provided, which is manufactured by compacting and heat-treating an iron-based soft magnetic powder, wherein 90% or more of the iron-based soft magnetic powder has an average particle size of 150 to 400 µm and 10% or less has an average particle size of 50 µm or less. The formed part may be a stator core for a linear motor.

## Description

### Statement Regarding Federally Sponsored Research or Development

This invention was made with government support under the '2026 Eco-Startup Support Project' promoted by the Ministry of Climate, Energy and Environment (MCEE) and operated by the Korea Environmental Industry & Technology Institute (KEITI).

### Technical Field

The present disclosure relates to a sintered part manufactured using an iron-based soft magnetic powder and a method of manufacturing the same.

### Background Art

Magnetic materials are classified into soft magnetic materials and hard magnetic materials. Soft magnetic materials have magnetism only when a magnetic field is present and lose their magnetism when the magnetic field disappears, whereas hard magnetic materials, once magnetized, do not lose their magnetism. Soft magnetism is used when it is necessary to minimize energy loss caused by alternating current electromagnetic waves.

Soft magnetic materials are used to manufacture soft magnetic parts used in various motors, such as stator components or rotor components, as well as in inductors, actuators, sensors, transformer cores, and the like. As one of the devices including soft magnetic parts, a compressor receives power from a power generating device such as a motor or turbine and operates to compress a working fluid such as air or refrigerant. Types of compressors include linear compressors, rotary compressors, and scroll compressors.

A linear motor used in a linear compressor generally includes a stator connected to a cylinder and around which a coil is wound, and a movable member connected to a piston and configured to reciprocate linearly by electromagnetic interaction with the stator. The stator includes an outer stator formed in a cylindrical shape and an inner stator formed in a cylindrical shape to be inserted into the interior of the outer stator. The movable member is installed between the outer stator and the inner stator so as to be movable in a linear direction.

Conventionally, as disclosed in Korean Patent Application Publication No. 10-2006-0117522 (Patent Document 1), a plurality of electrical steel sheets are stacked in a radial direction to form an outer stator and an inner stator. In this structure, when the frequency increases due to high-speed operation, a large amount of eddy current flows, which generates heat and causes a decrease in motor efficiency. Further, the process of stacking the plurality of electrical steel sheets increased the number of parts and the time required for production, leading to a problem of rising manufacturing costs.

While conventional soft magnetic parts have been manufactured by stacking electrical steel sheets as described above, recent methods involve manufacturing parts by compression molding and sintering at high temperatures a soft magnetic composite (SMC) material which is formed by coating iron-based soft magnetic powder with an insulating material together with a lubricant or a binder. Unlike the two-dimensional method of stacking electrical steel sheets, SMC enables three-dimensional electromagnetic field design, and also has the advantage of significantly increasing complexity due to the increased degree of design freedom.

SMCs generally exhibit lower core loss and superior magnetic properties than stacked electrical steel sheets at high frequencies of 10 kHz or higher, whereas they exhibit higher core loss than stacked electrical steel sheets at frequencies of 1,000 Hz or lower, which are the main operating frequencies of motors. Therefore, in order to apply SMCs to motors and the like, it is important to reduce core loss in a frequency range of 1,000 Hz or lower.

A method of insulating iron-based powder particles by applying an insulating coating thereto in order to reduce core loss is known (for example, U.S. Patent No. 6,348,265 (Patent Document 2)). However, such a method has disadvantages in terms of the powder manufacturing process and manufacturing cost, as it requires coating with a separate insulating material or adding binders. In addition, since the proportion of iron in the material is reduced by an amount corresponding to the thickness occupied by the insulating material on the powder particles, there are also problems including lower energy density per unit volume and reduced saturation magnetic flux.

### Disclosure of the Invention

### Technical Goals

In order to solve the aforementioned problems, an object of the present disclosure is to provide a formed part manufactured using an iron-based soft magnetic powder having low core loss in a frequency range of 1,000 Hz or less, and a method of manufacturing the same.

### Technical Solutions

To achieve the above-mentioned object, an aspect of the present disclosure provides a formed part manufactured by compacting and heat-treating an iron-based soft magnetic powder, wherein 90% or more of the iron-based soft magnetic powder has an average particle size of 150 to 400 µm, and 10% or less of the iron-based soft magnetic powder has an average particle size of 50 µm or less.

The formed part may be a stator core for a linear motor.

The formed part may be a stator core for an axial flux motor.

The iron-based soft magnetic powder may include an insulating layer having a thickness of 10 to 50 nm and containing Si, Al, Mn, and O on an outer surface thereof, and comprise, in weight percent, more than 2.0% and not more than 6.5% of Si, more than 0.02% and not more than 1.0% of Al, more than 0.05% and not more than 0.6% of Mn, more than 0% and less than 0.1% of O, and the balance of Fe and inevitable impurities.

According to another aspect of the present disclosure, a stator core for a linear motor manufactured by compacting and heat-treating an iron-based soft magnetic powder is provided, wherein 90% or more of the iron-based soft magnetic powder has an average particle size of 150 to 400 µm, and 10% or less of the iron-based soft magnetic powder has an average particle size of 50 µm or less.

According to another aspect of the present disclosure, there is provided a method of manufacturing a sintered part including steps of: a) preparing an iron-based soft magnetic powder containing Si in an amount of more than 2.0% and not more than 6.5% by weight and having an insulating layer on an outer surface thereof, wherein at least 90% of the iron-based soft magnetic powder has an average particle size of 150 to 400 µm, and 10% or less of the iron-based soft magnetic powder has an average particle size of 50 µm or less; b) compacting the soft magnetic iron-based powder; and c) heat-treating the powder compacted in step b).

In step b), a compaction pressure may be 600 MPa or more and 2,000 MPa or less.

In step c), the insulating layer may be maintained up to a heat treatment temperature of 1,000°C or lower.

The iron-based soft magnetic powder may include an insulating layer having a thickness of 10 to 50 nm and containing Si, Al, Mn, and O on an outer surface thereof, and comprise, in weight percent, more than 2.0% and not more than 6.5% of Si, more than 0.02% and not more than 1.0% of Al, more than 0.05% and not more than 0.6% of Mn, more than 0% and less than 0.1% of O, and the balance of Fe and inevitable impurities.

According to another aspect of the present disclosure, there is provided a formed part manufactured by the above method.

According to another aspect of the present disclosure, there is provided a stator core for a linear motor manufactured by the above method.

According to another aspect of the present disclosure, there is provided a stator core for an axial flux motor manufactured by the above method.

### Advantageous Effects

According to the present disclosure, it is possible to provide a formed part manufactured using an iron-based soft magnetic powder having low core loss in a frequency range of 1,000 Hz or less.

A formed part manufactured using an iron-based soft magnetic powder according to the present disclosure may have increased magnetic flux density and reduced eddy current loss.

It is possible to improve motor efficiency by applying a stator core manufactured using an iron-based soft magnetic powder according to the present disclosure.

### Brief Description of Drawing

FIG. 1 is a flowchart illustrating a method of manufacturing a sintered part according to the present disclosure.
FIG. 2 illustrates a schematic diagram of a portion of a linear motor.
FIG. 3 schematically illustrates an outer stator for a linear motor according to the related art.
FIG. 4 illustrates an inner stator core for a linear motor according to the related art.
FIG. 5 is a schematic diagram explaining the mechanism by which additional core loss due to eddy current occurs in a motor core according to the related art.
FIG. 6 schematically illustrates a shape of a motor core according to the present disclosure.
FIG. 7 is a schematic diagram illustrating magnetic flux formation characteristics of an outer stator core.
FIG. 8 shows an exploded view of a stator assembly for an axial flux motor.

### Best Mode for Carrying Out the Invention

Hereinafter, the present invention will be described in detail.

The present disclosure provides a formed part manufactured by compacting and heat-treating (herein also referred to as sintering) an iron-based soft magnetic powder, wherein 90% or more of the iron-based soft magnetic powder has an average particle size of 150 to 400 µm and 10% or less of the iron-based soft magnetic powder has an average particle size of 50 µm or less.

The present disclosure also provides a stator core for a linear motor manufactured by compacting and heat-treating an iron-based soft magnetic powder, wherein 90% or more of the iron-based soft magnetic powder has an average particle size of 150 to 400 µm, and 10% or less of the iron-based soft magnetic powder has an average particle size of 50 µm or less.

The present disclosure also provides a method of manufacturing a sintered part including steps of: a) preparing an iron-based soft magnetic powder containing Si and including an insulating layer on an outer surface thereof, wherein 90% or more of the iron-based soft magnetic powder has an average particle size of 150 to 400 µm, and 10% or less of the iron-based soft magnetic powder has an average particle size of 50 µm or less; b) compacting the iron-based soft magnetic powder; and c) heat-treating the powder compacted in step b). Modes for Carrying Out the Invention

The aforementioned objectives, features, and advantages will be described in detail below with reference to the accompanying drawings, and accordingly, a person skilled in the art to which the present invention pertains will be able to easily practice the present disclosure. In describing the present disclosure, if it is determined that a detailed description of known technology related to the present disclosure may unnecessarily obscure the essence of the present invention, such description is omitted.

Hereinafter, preferred embodiments according to the present disclosure will be described with reference to the accompanying drawings. Embodiments of the present disclosure may be modified in various different forms, and the technical concept of the present disclosure is not limited to the embodiments described below. In addition, embodiments of the present disclosure are provided to more completely explain the present disclosure to those skilled in the art to which the present invention pertains.

In drawings, the same reference numeral is used to indicate the same or similar components. In the detailed description, terms such as "center," "top," "bottom," "left," "right," "vertical," "horizontal," "inside," and "outside" are based solely on the orientations or positional relationships shown in the drawings and do not suggest or imply that components must be arranged or operated in a specific orientation or positional relationship.

Terms such as "about," "approximately," and "substantially" in this specification are used to mean a figure or characteristic mentioned in the context or an approximation thereof, and the figure or characteristic should be understood to include a customary tolerance.

### (Method of manufacturing iron-based soft magnetic powder)

Hereinafter, a method of manufacturing an iron-based soft magnetic powder used in the present disclosure will be described. The iron-based soft magnetic powder of the present disclosure may be manufactured by atomizing molten steel to produce powder.

More specifically, the manufacturing method may include steps of solidifying molten steel containing, by weight, more than 2.0% and not more than 6.5% of Si, more than 0.02% and not more than 1.0% of Al, more than 0.05% and not more than 0.6% of Mn, more than 0% and less than 0.1% of O, and the balance of Fe and unavoidable impurities, by cooling the molten steel from 1,500°C to 1,000°C within 10 minutes, cooling the solidified steel from 1,000°C to 900°C or lower within 100 minutes, heating the cooled steel to liquefy it, and atomizing the liquefied steel to produce powder.

In the step of solidifying, the ratio of the surface area (S) to the volume (V) of the solidified molten steel may be 4 cm⁻¹ or less. In the case that the S/V ratio exceeds 4 cm⁻¹, the surface area that reacts with oxygen in the atmosphere at high temperatures to form a thick oxide layer becomes excessively large. The S/V ratio may be preferably 0.3 cm⁻¹ or less, and more preferably 0.11 cm⁻¹ or less. However, since the solidified molten steel is reheated to be liquefied, it is preferable that the S/V ratio be 0.08 cm⁻¹ or greater in consideration of the time required for liquefaction.

### (Iron-based soft magnetic powder)

According to an embodiment of the present disclosure, the iron-based soft magnetic powder contains, by weight, more than 2.0% and not more than 6.5% of Si, more than 0.02% and not more than 1.0% of Al, more than 0.05% and not more than 0.6% of Mn, more than 0% and less than 0.1% of O, with the balance being Fe and unavoidable impurities.

The content of Si may be more than 2.0% by weight, and is preferably not more than 6.5% by weight. Si increases the electrical resistivity of the iron-based powder. When the Si content exceeds 2 wt%, the iron-based powder may be maintained in a ferrite phase during high-temperature forming processes such as sintering, and thus the particle size of the powder before forming and the particle size of the powder in a part formed through high-temperature and/or high-pressure may be substantially identical. When the Si content is less than 2 wt%, the particle size of the iron-based powder before forming may differ significantly from the particle size of the iron-based powder in the formed part. On the other hand, when the Si content is high, the attractive and/or repulsive forces between the elements change significantly due to Si, resulting in large, localized changes in the composition of the liquefied molten steel. In other words, if the Si content is high, a problem arises where the composition varies depending on the particle size of the iron-based powder. In addition, in the iron-based powder of the present disclosure, it has been confirmed that the magnetic properties, including magnetic permeability and core loss, are most excellent when the Si content is approximately 6.5 wt%. When the Si content exceeds 6.5 wt%, the magnetic properties deteriorate, therefore, it is desirable to limit the upper limit of the Si content to 6.5%.

The content of Al is greater than 0.02 wt%, and is preferably 1.0 wt% or less. Al also serves to increase the electrical resistivity of the iron-based powder. In terms of controlling impurities such as O and S to improve the magnetic properties of the iron-based powder, it is more desirable for the Al content to exceed 0.3 wt%. On the other hand, since Al readily bonds with O at high temperatures, an excessive increase in the O content may occur during the manufacturing process of the iron-based powder. The higher the Si content relative to the Al content, the more effectively the increase in the O content caused by Al can be suppressed. For these reasons, it is desirable for the Al content to be 1.0 wt% or less.

The content of Mn is greater than 0.05 wt%, and is preferably 0.6 wt% or less. Similar to Si, Mn serves to increase the electrical resistivity of the iron-based powder. Furthermore, Mn is an element that controls impurities within the iron-based powder to prevent them from refining the grain size while forming oxides and sulfides, thereby improving the magnetic properties of the iron-based powder. For this purpose, it is desirable to add Mn in an amount exceeding 0.05 wt%. Additionally, it is desirable for the Mn content to exceed 0.2 wt% to effectively precipitate oxygen or sulfur in the steel as oxides or sulfides. However, if the Mn content is too high, it may adversely affect magnetic properties; therefore, it is desirable to limit the Mn content to 0.6 wt% or less.

The content of O is greater than 0 wt%, and is preferably less than 0.1 wt%. The O content consistently increases during the high-temperature processes involved in the manufacturing of the iron-based powder. In the final part, which is formed at high temperatures and/or high pressures, a lower O content is advantageous for magnetic properties. To this end, it is desirable for the O content to be less than 0.1 wt%. On the other hand, O reacts with Si, Al, or Mn on the surface of the iron-based powder to form an electrically insulating oxide layer. When an insulating layer containing Si, Al, Mn, and O is formed on the surface of the iron-based powder, it is possible to manufacture soft magnetic parts with reduced core loss. For this purpose, it is desirable for the O content to exceed 0 wt%.

The balance consists of Fe and inevitable impurities. These impurities may be unintentionally introduced during typical manufacturing processes, and their presence would be anticipated by any person skilled in the art.

The impurities may include C, N, S, Ti, Mg, or the like. It is preferable to limit the content of C to less than 0.01 wt%, and more preferably to less than 0.004 wt%. The content of N is preferably less than 0.01 wt%, and more preferably less than 0.004 wt%. The content of S may be limited to less than 0.05 wt%, preferably less than 0.05 wt%, more preferably less than 0.01 wt%, and even more preferably less than 0.003 wt%. It is desirable to limit the content of Ti to less than 0.01 wt%. It is desirable to limit the content of Mg to less than 0.05 wt%.

The iron-based soft magnetic powder according to the present disclosure includes an insulating layer containing Si, Al, Mn, and O on its outer surface. Unlike conventional technologies of forming an insulating layer by coating an iron-based powder with a separate organic or inorganic insulating material, the insulating layer of the iron-based soft magnetic powder of the present disclosure is formed while an oxide layer on top of a molten metal is mixed with the powder and slowly cooled during the manufacture of the powder.

In an embodiment, the thickness of the insulating layer may be in the range of 10 to 50 nm. When the thickness of the insulating layer is less than 10 nm, the insulation property may be insufficient, leading to an increase in eddy current loss and, consequently, an increase in core loss. When the thickness of the insulating layer exceeds 50 nm, the oxygen content in the steel may significantly increase, which may deteriorate the magnetic properties.

### (Method of manufacturing sintered parts)

To utilize the iron-based soft magnetic powder as a material for soft magnetic components such as motors, it is critical to reduce core loss in the frequency range of 1,000 Hz or less.

Core loss is broadly classified into hysteresis loss and eddy current loss. Hysteresis loss refers to the loss generated when a magnetic material is magnetized in response to changes in the electromagnetic field caused by alternating current. Eddy current loss refers to the loss generated by induced currents arising from changes in the electromagnetic field caused by alternating current.

Typically, the hysteresis loss is predominant at low frequencies, whereas the eddy current loss accounts for the majority of the total core loss at high frequencies. While general iron-based powders exhibit superior eddy current loss characteristics compared to electrical steel sheets, resulting in low core loss at 10 kHz or higher, their use in applications below 1,000 Hz has been limited due to poor hysteresis characteristics.

Hysteresis loss is proportional to 1/(√Gs) where Gs represents the grain size within the metal, and eddy current loss is proportional to (√Gs). Therefore, it is necessary to appropriately control the grain size range to reduce core loss. The optimal grain size is also influenced by the electrical resistivity of the material, and a higher electrical resistivity allows for minimum core loss at a larger grain size. This is associated with the reduction of eddy current loss in materials with higher electrical resistivity. In other words, higher electrical resistance leads to a reduction in core loss.

In view of these considerations, according to an embodiment of the present disclosure, a formed part is manufactured by compacting and heat-treating the iron-based soft magnetic powder, wherein at least 90% of the iron-based soft magnetic powder has an average particle size of 150 to 400 µm, and 10% or less of the iron-based soft magnetic powder has an average particle size of 50 µm or less. By adding the powder with an average particle size of 50 µm or less in an amount of 10% or less, the magnetic flux density may be improved.

If the average particle size of the iron-based soft magnetic powder is less than 150 µm, there is a concern that hysteresis loss cannot be sufficiently reduced, leading to an inability to sufficiently reduce core loss in a low-frequency range of 1,000 Hz or less. On the other hand, if the average particle size exceeds 400 µm, eddy current loss increases, and the density of the manufactured part may decrease due to the inability to sufficiently narrow the gaps between particles during molding under high-temperature and high-pressure conditions. The average particle size is more preferably greater than 200 µm, and under this condition, the hysteresis loss may be sufficiently reduced, while the eddy current loss generated in each particle may not be significant.

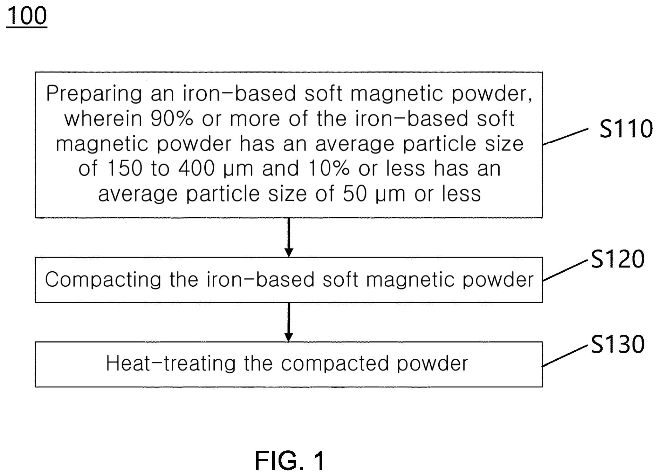

Specifically, FIG. 1 is a flowchart illustrating a method 100 of manufacturing a sintered part according to the present disclosure. The method 100 of manufacturing a sintered part includes: a step S110 of preparing an iron-based soft magnetic powder containing more than 2.0 wt% and not more than 6.5 wt% of Si and having an insulating layer on an outer surface thereof, wherein at least 90% of the iron-based soft magnetic powder has an average particle size of 150 to 400 µm, and 10% or less of the iron-based soft magnetic powder has an average particle size of 50 µm or less; a step S120 of compacting the soft magnetic iron-based powder; and a step S130 of heat-treating the powder compacted in step S120.

In step S120, a compaction pressure is preferably in the range of 600 MPa to 2,000 MPa. In step S130, residual stress can be relieved by performing heat treatment at a temperature of 900°C or lower. Here, the insulating layer of the iron-based powder may be maintained at heat treatment temperatures of up to 1,000°C.

The formed part according to the present disclosure is manufactured by sintering the iron-based soft magnetic powder, wherein at least 90% of the soft magnetic iron-based powder has an average particle size of 150 to 400 µm, and 10% or less has an average particle size of 50 µm or less. The iron-based soft magnetic powder includes an insulating layer containing Si, Al, Mn, and O with a thickness of 10 to 50 nm on an outer surface thereof and comprises, in wt%, more than 2.0% and not more than 6.5% of Si, more than 0.02% and not more than 1.0% of Al, more than 0.05% and not more than 0.6% of Mn, more than 0% and less than 0.1% of O, with the balance being Fe and inevitable impurities.

The sintered part manufactured by the aforementioned method includes an iron-based soft magnetic powder comprising, in wt%, more than 2.0% and not more than 6.5% of Si, more than 0.02% and not more than 1.0% of Al, more than 0.05% and not more than 0.6% of Mn, more than 0% and less than 0.1% of O, and the balance being Fe and inevitable impurities, and an insulating layer containing Si, Al, Mn, and O formed at interfaces between the iron-based soft magnetic powder particles.

### (Method of manufacturing a stator for a linear motor)

Hereinafter, a stator for a linear motor will be described in more detail as an example of a formed part manufactured using the iron-based soft magnetic powder.

A linear compressor utilizes a linear motor to generate a linear reciprocating motion of a piston for compressing a working fluid. This configuration improves efficiency by reducing mechanical losses that otherwise occur in conventional rotary compressors when converting rotational motion into linear motion.

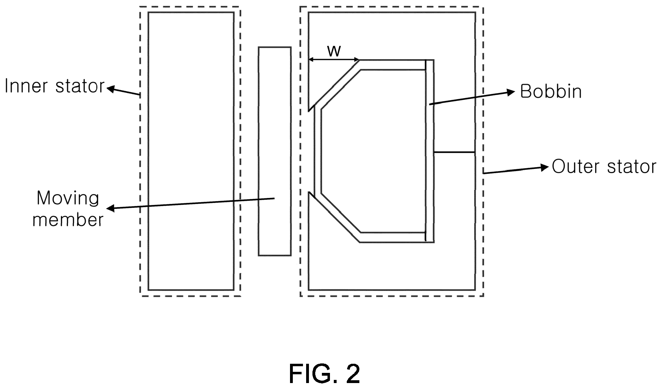

FIG. 2 shows a schematic diagram of a portion of a linear motor. A linear motor is largely composed of a stator and a moving member. The moving member is provided with permanent magnets attached thereto to generate a reciprocating motion of a piston. The stator consists of an outer stator and an inner stator. The outer stator includes a ring-shaped outer core, and a bobbin provided inside the outer core with a coil wound therein to form a magnetic field. The outer core has a hollow ring shape, surrounds the bobbin, and serves as a passage for the magnetic field. The inner stator includes an inner core disposed inside the outer core with a predetermined gap therebetween, and is fixed to a cylinder block of a linear compressor.

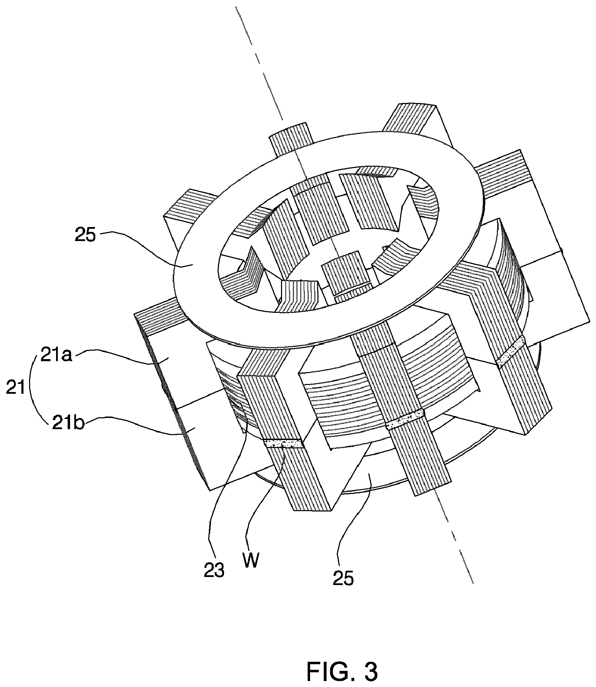

FIG. 3 schematically illustrates an outer stator of a linear motor according to the related art. The outer core 21 includes two outer core blocks 21a and 21b divided in the longitudinal direction. The two outer core blocks 21a and 21b are integrally coupled by performing welding (W) on the dividing line of the two outer core blocks 21a and 21b from the outside of the outer core 21. Each of the outer core blocks 21a and 21b is formed by stacking a plurality of outer core sheets in a ring shape in the circumferential direction and integrally coupling the plurality of outer core sheets, which are stacked in the ring shape, by a fastening ring 25.

In a conventional rotary motor core, the magnetic field is formed in the circumferential direction. In contrast, in the outer stator of the linear motor as described above, the magnetic field is formed in the axial direction to generate the linear motion of the moving member. Accordingly, when manufacturing the core using electrical steel sheets, the electrical steel sheets are stacked in the circumferential direction as shown in FIG. 3. In such a stacking method, due to the nature of electrical steel sheets having a constant thickness in the radial direction, a difference occurs between the inner diameter and the outer diameter of the core 21. This results in a portion on the outer diameter side where the core cannot surround the coil, thereby causing a problem in that the cross-sectional area through which magnetic flux can flow is reduced.

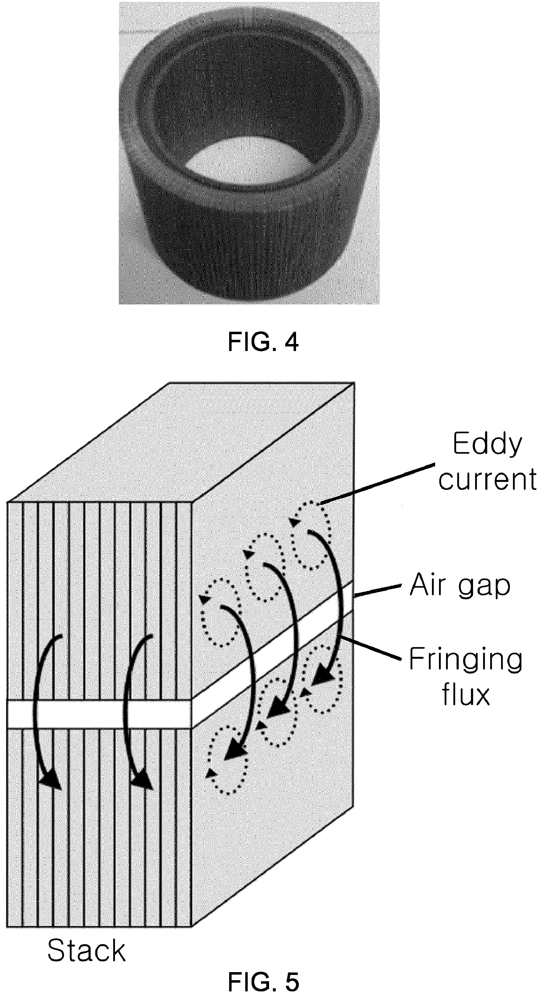

In the linear motor according to the related art, the inner core is also manufactured in a form in which electrical steel sheets are stacked in the circumferential direction to form an axial magnetic field, similar to the outer core (see FIG. 4). In this case as well, due to the difference between the inner diameter and the outer diameter, gaps exist between the stacked steel sheets on the outer side. As a result, as shown in FIG. 5, a fringing flux is generated, thereby causing additional core loss due to eddy currents.

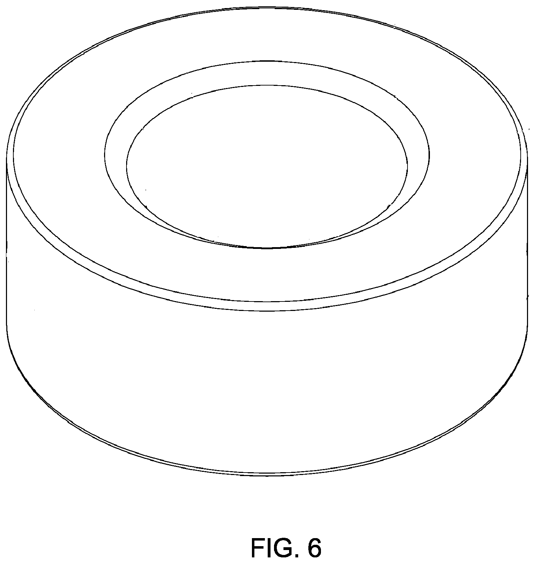

According to the present disclosure, by compacting and heat-treating the iron-based soft magnetic powder having excellent magnetic properties and capable of being molded into a desired shape to manufacture a donut-shaped (or toroidal) inner core and outer core, the aforementioned problems of the related art can be solved and motor efficiency can be improved. FIG. 6 schematically illustrates a shape of a motor core according to the present disclosure, and additional shape modifications are possible to form magnetic flux and minimize loss. In particular, in the case of the outer core, a space is formed therein to accommodate the bobbin as shown in FIG. 2, and for this purpose, a method of manufacturing the core by separately fabricating upper and lower portions of the core and then coupling them may be used. Furthermore, depending on the design purpose, it is also possible to manufacture the outer core or the inner core as a plurality of pieces divided in the circumferential direction. As described above, the donut-shaped outer core that surrounds the entire bobbin increases the area through which the magnetic flux flows compared to the related art shown in FIG. 3. As a result, a desired magnetic flux can be generated even at a low magnetic flux density, thereby improving motor efficiency. The relationship between magnetic flux, magnetic flux density, and cross-sectional area is defined as Φ (magnetic flux) = B (magnetic flux density) × A (cross-sectional area).

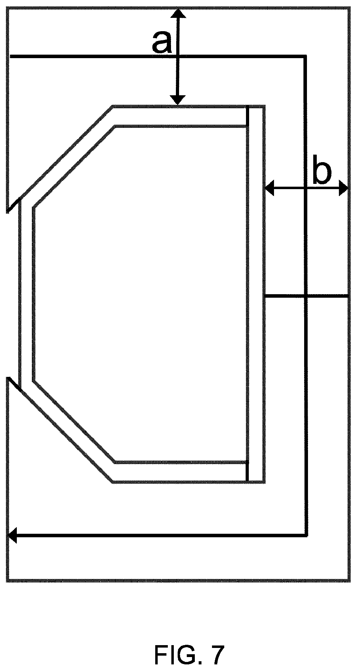

In addition, in the case of the outer stator according to the related art, as shown in FIG. 7, the thicknesses 'a' and 'b' must have the same value to achieve maximum efficiency with respect to the saturation magnetic flux density. In contrast, for the donut-shaped core of the present disclosure, the area through which the magnetic flux can pass can be maintained the same even if the thickness 'b' is reduced. As a result, it is possible to reduce the outer diameter of the outer core or to increase the radial size of the internal bobbin. Reducing the outer diameter of the outer core has the effect of reducing the overall size of the compressor. Furthermore, the increase in the size of the bobbin allows for an increase in the number of winding turns, which results in the effect of reducing the current required for generating the same magnetic flux. Consequently, motor efficiency can be improved.

A method of manufacturing a stator core for a linear motor of the present disclosure includes steps of: a) preparing an iron-based soft magnetic powder containing Si in an amount of more than 2.0% and not more than 6.5% by weight and including an insulating layer on an outer surface thereof, wherein an average particle size of 90% or more of the iron-based soft magnetic powder is 150 to 400 µm, and an average particle size of 10% or less of the iron-based soft magnetic powder is 50 µm or less; b) compacting the iron-based soft magnetic powder; and c) heat-treating the powder compacted in step b). In step b), a compaction pressure may be 600 MPa or more and 2,000 MPa or less. In step c), residual stress is removed through heat treatment at 900°C or lower, and the insulating layer may be maintained up to a heat treatment temperature of 1,000°C or lower.

The iron-based soft magnetic powder includes an insulating layer with a thickness of 10 to 50 nm containing Si, Al, Mn, and O on an outer surface thereof, and comprises, by weight, more than 2.0% and not more than 6.5% of Si, more than 0.02% and not more than 1.0% of Al, more than 0.05% and not more than 0.6% of Mn, more than 0% and less than 0.1% of O, and the balance of Fe and inevitable impurities.

The core loss of the soft magnetic core manufactured as described above is 140 W/kg or less at 1T and 1,000 Hz, the magnetic flux density at 50 Hz and 10,000 A/m exceeds 1.1T, and the electrical resistivity exceeds 40 µΩ·cm.

When using the above-described method, it is possible to manufacture a core having a shape that surrounds the entire bobbin, as compared to the case of manufacturing a motor core by stacking electrical steel sheets. Therefore, motor efficiency may be improved, and at the same time, the generation of eddy currents may be reduced due to the properties of the soft magnetic powder, which decreases core loss in higher frequency ranges, thereby enabling further improvement in efficiency.

In addition, the motor core manufactured by the above method includes an iron-based soft magnetic powder containing, by weight, more than 2.0% and not more than 6.5% of Si, more than 0.02% and not more than 1.0% of Al, more than 0.05% and not more than 0.6% of Mn, more than 0% and less than 0.1% of O, and the balance of Fe and inevitable impurities, and an insulating layer containing Si, Al, Mn, and O on an interface between the soft magnetic iron-based powder particles.

### (Method of manufacturing a stator for an axial flux motor)

An example of a formed part manufactured using the iron-based soft magnetic powder is a stator for an axial flux motor. Axial flux motors may be utilized in electric vehicles, in-wheel motors, drones, and the like.

An axial flux motor operates on the principle that a rotor reacts by generating an axial flux in a direction parallel to, rather than perpendicular to, the shaft of the rotor. The axial flux motor includes a rotor assembly including a disc-shaped rotor core equipped with a magnetic material and a shaft disposed on a central axis of the rotor core and configured to rotate with the rotor core, and a stator assembly including a stator core and a coil wound around the stator core to generate a magnetic flux in the direction of the rotational axis of the rotor assembly.

According to an embodiment of the present disclosure, a method of manufacturing a stator core of an axial flux motor includes steps of: a) preparing an iron-based soft magnetic powder containing Si in an amount of more than 2.0% and not more than 6.5% by weight and having an insulating layer on an outer surface thereof, wherein at least 90% of the iron-based soft magnetic powder has an average particle size of 150 to 400 µm, and 10% or less of the iron-based soft magnetic powder has an average particle size of 50 µm or less; b) compacting the soft magnetic iron-based powder; and c) heat-treating the powder compacted in step b). In step b), a compaction pressure may be 600 MPa or more and 2,000 MPa or less. In step c), residual stress is removed through heat treatment at 900°C or lower, and the insulating layer may be maintained up to a heat treatment temperature of 1,000°C or lower.

The iron-based soft magnetic powder includes an insulating layer with a thickness of 10 to 50 nm containing Si, Al, Mn, and O on the outer surface thereof, and comprises, by weight, more than 2.0% and not more than 6.5% of Si, more than 0.02% and not more than 1.0% of Al, more than 0.05% and not more than 0.6% of Mn, more than 0% and less than 0.1% of O, and the balance of Fe and inevitable impurities.

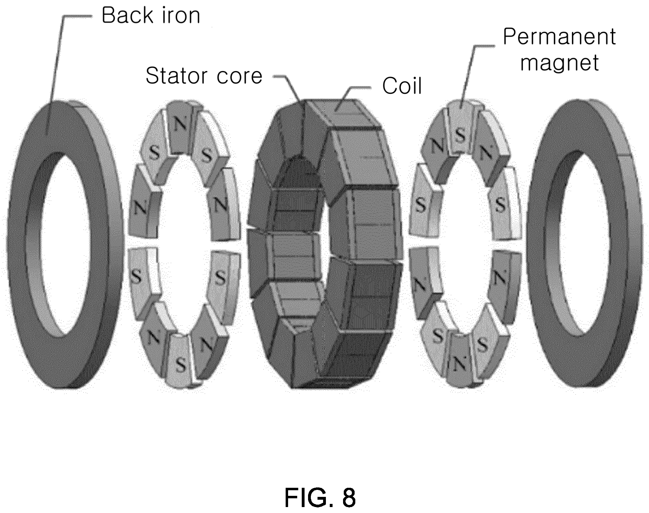

As an example, an exploded view of a stator assembly for an axial flux motor is illustrated in FIG. 8. As shown in FIG. 8, the stator core may be manufactured by sintering the iron-based powder to form each of a plurality of core blocks in the circumferential direction and then coupling these core blocks. Alternatively, the stator core may be entirely sintered as a single formed part. The stator core of the axial flux motor may be modified in shape depending on the design purpose. In an embodiment, the core may be manufactured by separately fabricating an upper portion and a lower portion of the core and then coupling them.

The description of the present disclosure provided above is for illustrative purposes only, and those skilled in the art to which the present disclosure pertains will understand that the disclosure may be easily modified into other specific forms without changing its technical spirit or essential features. Therefore, the embodiments described above should be understood as illustrative and not restrictive in all aspects.

The scope of the present disclosure is defined by the appended claims, and all changes or modifications derived from the meaning and scope of the claims and their equivalents should be construed as being included within the scope of the present disclosure.

### Industrial Applicability

According to the present disclosure, it is possible to provide a formed part manufactured using an iron-based soft magnetic powder having a low core loss in a frequency range of 1,000 Hz or less.

A formed part manufactured using an iron-based soft magnetic powder according to the present disclosure may exhibit an increased magnetic flux density and a reduced eddy current loss.

By applying a stator core manufactured using an iron-based soft magnetic powder according to the present disclosure, motor efficiency may be improved.

## Claims

1. A formed part manufactured by compacting and heat-treating an iron-based soft magnetic powder,
wherein 90% or more of the iron-based soft magnetic powder has an average particle size of 150 to 400 µm, and 10% or less of the iron-based soft magnetic powder has an average particle size of 50 µm or less.

2. The formed part of claim 1,
wherein the formed part is a stator core for a linear motor.

3. The formed part of claim 1,
wherein the formed part is a stator core for an axial flux motor.

4. The formed part of claim 1,
wherein the iron-based soft magnetic powder comprises an insulating layer having a thickness of 10 to 50 nm and containing Si, Al, Mn, and O on an outer surface thereof, and
comprises, in weight percent, more than 2.0% and not more than 6.5% of Si, more than 0.02% and not more than 1.0% of Al, more than 0.05% and not more than 0.6% of Mn, more than 0% and less than 0.1% of O, and the balance of Fe and inevitable impurities.

5. A stator core for a linear motor manufactured by compacting and heat-treating an iron-based soft magnetic powder,
wherein 90% or more of the iron-based soft magnetic powder has an average particle size of 150 to 400 µm, and 10% or less of the iron-based soft magnetic powder has an average particle size of 50 µm or less.

6. A method of manufacturing a sintered part, the method comprising steps of:
a) preparing an iron-based soft magnetic powder containing Si and comprising an insulating layer on an outer surface thereof, wherein 90% or more of the iron-based soft magnetic powder has an average particle size of 150 to 400 µm, and 10% or less of the iron-based soft magnetic powder has an average particle size of 50 µm or less;
b) compacting the iron-based soft magnetic powder; and
c) heat-treating the powder compacted in step b).

7. The method of claim 6,
wherein a compaction pressure in step b) is 600 MPa or more and 2,000 MPa or less.

8. The method of claim 6,
wherein in step c), the insulating layer is maintained up to a heat treatment temperature of 1,000°C or lower.

9. The method of claim 6,
wherein the iron-based soft magnetic powder comprises an insulating layer having a thickness of 10 to 50 nm and containing Si, Al, Mn, and O on an outer surface thereof, and
comprises, in weight percent, more than 2.0% and not more than 6.5% of Si, more than 0.02% and not more than 1.0% of Al, more than 0.05% and not more than 0.6% of Mn, more than 0% and less than 0.1% of O, and the balance of Fe and inevitable impurities.

10. A formed part manufactured by the method of any one of claims 6 to 9.

11. A stator core for a linear motor manufactured by the method of any one of claims 6 to 9.

12. A stator core for an axial flux motor manufactured by the method of any one of claims 6 to 9.
